# DEMANDE DE BREVET EUROPEEN

(11) **EP 1 555 422 A1**
(43) Date de publication de la demande: **20.07.2005**
(21) Numéro de dépôt: 05300026.1
(22) Date de dépôt: 12.01.2005
(51) Int. Cl.: F02M 35/108, F02B 29/02, F02B 31/08, F02B 5/00

(54) **Dispositif d'admission pour moteur thermique a allumage commande**

(30) Priorité: 15.01.2004 FR 0400351
(71) Demandeur: Renault s.a.s., 92100 Boulogne Billancourt (FR)
(72) Inventeur: Baby, Xavier, 92130, ISSY LES MOULINEAUX (FR); Bertin, Claude, 78370, PLAISIR (FR); Le Nezet, André, 78160, MARLY LE ROI (FR); Rivere, Jean Pierre, 75016, PARIS (FR)

(57) **Abrégé**

Dispositif d'admission pour moteur thermique à allumage commandé comportant pour chaque cylindre au moins un conduit d'admission (1) débouchant dans ledit cylindre, l'admission du mélange air-carburant dans ce cylindre étant commandée par une soupape (3) pour ledit conduit, au moins un injecteur (4) étant disposé en amont de la soupape (3) pour injecter le carburant dans le conduit (1); caractérisé en ce qu'à l'intérieur du conduit d'admission (1), entre l'injecteur (4) et la soupape (3) est fixée une lame flexible (5) qui est rendue solidaire de la paroi (6) du conduit (1) sur une certaine langueur (L) de celui-ci, à partir de la soupape (3) et qui est libre par rapport à la paroi (6) du conduit (1) sur le reste de sa longueur, cette partie libre de la lame (5) pouvant fléchir entre une position de repos dans laquelle cette lame (5) sépare diamétralement le conduit (1), en deux parties (1a, 1b) sensiblement égales et une position dans laquelle l'une des deux parties du conduit (1) est obturée par ladite lame flexible (5).

## Description

La présente invention concerne un dispositif d'admission pour moteur thermique à allumage commandé comportant pour chaque cylindre au moins un conduit d'admission débouchant dans ledit cylindre, l'admission du mélange air-carburant dans ce cylindre étant commandée par une soupape pour ledit conduit, au moins un injecteur étant disposé en amont de la soupape pour injecter le carburant dans le conduit.

On sait que dans les conduits d'admission, le mélange d'air et de carburant circule à une vitesse et dans des conditions aérodynamiques qui dépendent de nombreux facteurs, tels que la forme, la section des conduits d'admission, le régime du moteur, etc...

Par ailleurs, le moteur thermique impose lui-même un débit d'admission du mélange gazeux dans ses cylindres qui dépend du régime du moteur.

Ainsi, le débit est faible à bas régime et il est très important au régime de puissance maximum.

Par ailleurs, le débit d'admission ainsi que les conditions aérodynamiques de circulation du mélange gazeux dans les conduits d'admission peuvent varier d'un cylindre à l'autre, du fait que les longueurs et les formes de ces conduits ne peuvent pas être exactement les mêmes pour les différents cylindres.

Le mouvement aérodynamique du mélange air - carburant dans les conduits d'admission est appelé par les spécialistes "tumble".

Le but de la présente invention est d'optimiser le "tumble" c'est-à-dire de créer des moyens permettant de régler les caractéristiques aérodynamiques du mélange air - carburant circulant dans les conduits d'admission, de façon que ces caractéristiques soient optimales pour tous les cylindres du moteur thermique et pour tous les régimes de celui-ci.

Suivant l'invention, le dispositif d'admission est caractérisé en ce qu'à l'intérieur du conduit d'admission, entre l'injecteur et la soupape est fixée une lame flexible qui est rendue solidaire de la paroi du conduit sur une certaine longueur de celui-ci, à partir de la soupape et qui est libre par rapport à la paroi du conduit sur le reste de sa longueur, cette partie libre de la lame pouvant fléchir entre une position de repos dans laquelle cette lame sépare diamétralement le conduit, en deux parties sensiblement égales et une position dans laquelle l'une des deux parties du conduit est obturée par ladite lame flexible.

En déplaçant la lame flexible entre les deux positions précitées, on modifie les caractéristiques aérodynamiques du mélange air - carburant circulant dans le conduit d'admission. Ainsi, en faisant varier la position de la partie flexible de la lame, il est possible d'optimiser les caractéristiques aérodynamiques du mélange air - carburant admis dans les cylindres, en fonction du régime du moteur et de corriger la dispersion de ces caractéristiques d'un cylindre à l'autre.

L'invention s'applique de préférence à un dispositif d'admission qui comprend deux conduits d'admission pour chaque cylindre, chaque conduit d'admission commportant une lame flexible du type précité.

Dans ce cas, la lame flexible peut être commune pour les deux conduits,

Selon une version préférée de l'invention, la lame flexible est rendue solidaire des parois des conduits par encastrement de ses bords latéraux dans lesdites parois.

Cet encastrement peut être réalisé lors du moulage des conduits d'admission.

De préférence également, dans la partie flexible de la lame, les bords latéraux de celle-ci sont sensiblement jointifs avec la paroi des conduits.

De ce fait, les deux parties des conduits d'admission séparées par la lame flexible sont sensiblement étanches l'une par rapport à l'autre, quelle que soit la position de la partie flexible de la lame.

Ce résultat peut être obtenu lorsque les conduits présentent une section sensiblement rectangulaire dans la zone où s'étend la partie flexible de la lame, cette section rectangulaire délimitant les diverses positions de la lame entre les deux positions précitées.

D'autres particularités et avantages de l'invention apparaîtront encore tout au long de la description.

Aux dessins annexés donnés à titres d'exemples non limitatifs :
- la figure 1 est une vue schématique en perspective de deux conduits d'admission juxtaposés d'un dispositif d'admission selon l'invention,
- la figure 2 est une vue en coupe longitudinale de l'un des conduits d'admission du dispositif d'admission selon l'invention,
- la figure 3 est une vue en plan de la lame flexible, du dispositif d'admission selon l'invention.
- la figure 4 est une vue en coupe transversale des deux conduits d'admission dans la partie où la lame est libre et peut fléchir entre deux positions extrêmes,
- la figure 5 est une vue en coupe transversale des deux conduits d'admission dans la partie où la lame est fixe par rapport aux conduits.

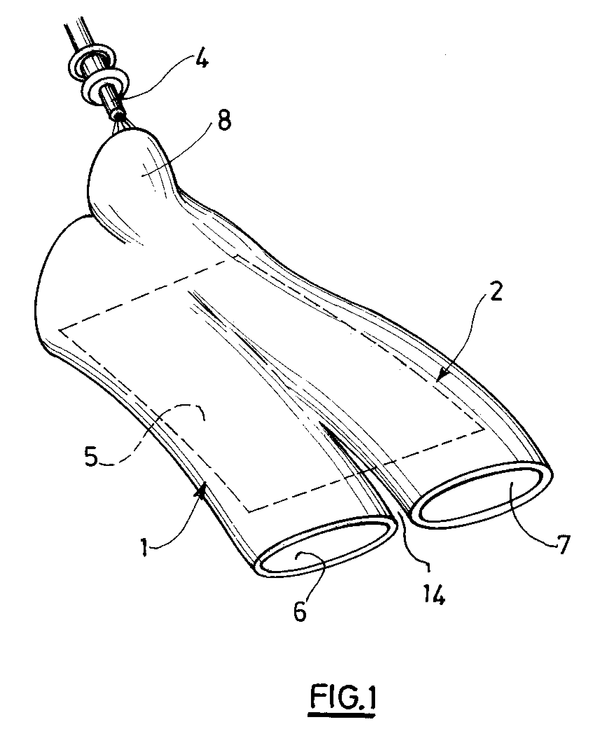

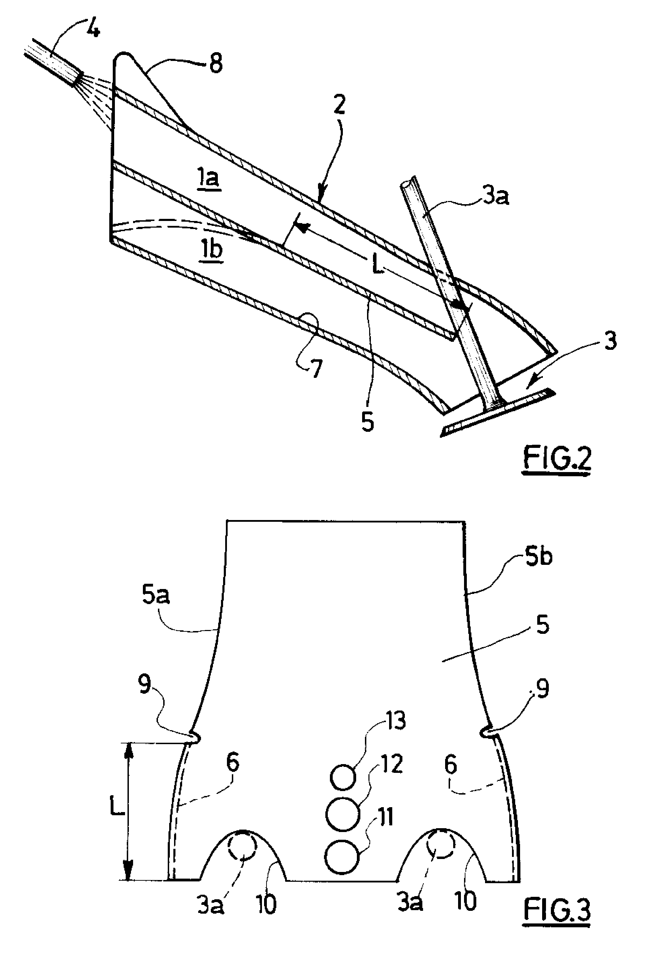

Comme montré, notamment par les figures 1 et 2, le dispositif d'admission pour moteur thermique à allumage commande comporte pour chaque cylindre, deux conduits d'admission 1, 2 débouchant séparément dans chacun des cylindres. L'admission du mélange air-carburant dans chaque cylindre est commandée par une soupape 3 (voir figure 2) pour chaque conduit 1, 2. Au moins un injecteur 4 est disposé en amont des soupapes 3 pour injecter le carburant dans les deux conduits 1, 2.

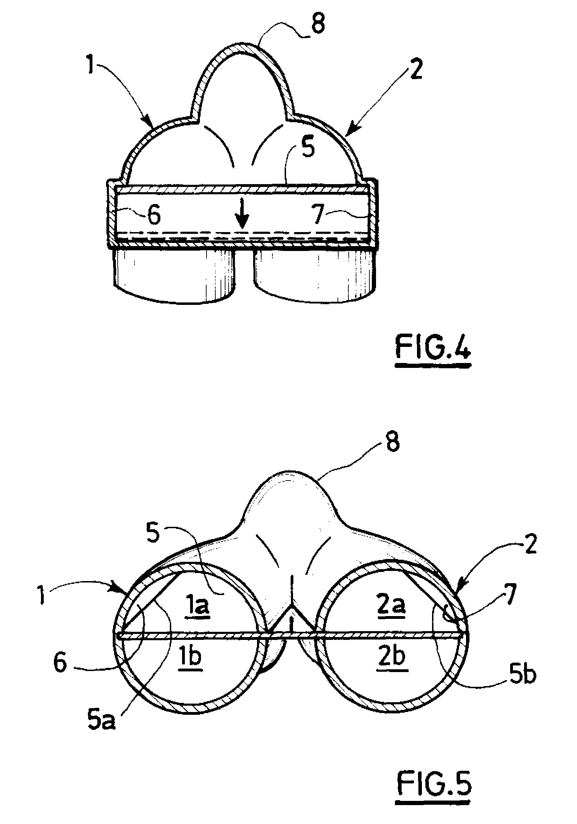

Conformément à l'invention, à l'intérieur des deux conduits d'admission 1, 2, entre l'injecteur 4 et les soupapes 3 est fixée une lame flexible 5 qui est rendue solidaire des parois 6, 7 des conduits 1, 2 sur une certaine longueur L de ceux-ci (voir figures 2 et 3), à partir des soupapes 3. La lame 5 est libre par rapport aux parois 6, 7 des conduits 1, 2 sur le reste de sa longueur. Cette partie libre de la lame 5 peut ainsi fléchir entre une position de repos (voir figure 2) dans laquelle cette lame 5 sépare diamétralement les deux conduits 1, 2, en deux parties 1a, 1b; 2a, 2b (voir également figure 5) sensiblement égales et une position (voir position en pointillé, figure 2 et figure 4) dans laquelle la partie inférieure 1b, 2b des conduits 1, 2 est obturée par la lame flexible 5.

Comme montré, notamment par la figure 5, la lame flexible 5 est rendue solidaire des parois 6, 7 des conduits 1, 2 par encastrement de ses bords latéraux 5a, 5b dans ces parois 6, 7. Cet encastrement peut être réalisé lors de la fabrication par moulage de fonderie des conduits d'admission 1, 2.

A cet effet, la partie de la lame 5 comprise entre les deux conduits 1, 2 présente (voir figure 3) des trous 11 , 12, 13 permettant le passage du sable lors de la réalisation du noyau de fonderie destiné à créer l'espace interpipe 14 (voir figure 1).

Dans la partie flexible, c'est-à-dire libre de la lame 5, les bords latéraux 5a, 5b de celle-ci sont sensiblement jointes avec la paroi 6, 7 des conduits 1, 2.

Dans l'exemple représenté sur la figure 4, les conduits 1, 2 présentent une section sensiblement rectangulaire dans la zone où s'étend la partie flexible de la lame 5, cette section rectangulaire délimitant les diverses positions de la lame 5 entre les deux positions précitées.

Cette disposition permet d'assurer l'étanchéité de la lame 5, par rapport aux conduits 1,2.

Les figures 1, 2, 4 et 5 montrent d'autre part, que les deux conduits 1, 2 comportent un bossage 8 à l'interieur duquel l'injecteur 4 est agencé pour injecter le carburant dans les conduits 1, 2.

Par ailleurs, comme montré par la figure 3, chacun des deux bords latéraux 5a, 5b de la lame 5, comporte une encoche 9 qui est comprise entre la partie de longueur L de la lame 5 qui est solidaire de la paroi 6, 7 des conduits 1, 2 et la partie de la lame qui est libre par rapport à ces conduits 1, 2.

De plus, l'extrémité de la lame 5 qui est adjacente aux deux soupapes d'admission 3, comporte deux échancrures 10, chacune de celles-ci étant engagée sur la tige 3a de l'une des deux soupapes.

Le déplacement de la lame 5 entre les deux positions représentées sur les figures 2 et 4 peut être commandé par un organe non représenté sur les figures, mais que l'homme du métier peut facilement imaginer. Le déplacement de cet organe peut être contrôlé au moyen d'un calculateur programmé en fonction de divers paramètres, tels que le régime du moteur, la pression exercée sur la pédale d'accélérateur, etc...

Dans la position de repos de la lame 5, les deux parties 1a, 1b, 2a, 2b des conduits 1, 2 sont libres. Le mélange air - carburant circule vers les soupapes 3 dans les parties 1a, 1b; 2a, 2b des conduits 1, 2 en utilisant ainsi toute la section de ceux-ci.

Cette position de la lame 5 convient pour les hauts régimes du moteur.

Dans la position de la lame 5 représentée en pointillés sur les figures 2 et 4; la partie libre et flexible de la lame 5 obture le passage dans la partie inférieure 1b, 2b des conduits 1, 2. Ainsi, le mélange air - carburant circule uniquement dans la partie supérieure 1a, 2a des conduits. La lame 5 réalise ainsi dans les conduits 1, 2, en aval de la zone d'injection, un étranglement qui a pour effet d'augmenter la vitesse des gaz, ce qui favorise les reprises à bas régime du moteur.

Les positions intermédiaires de la lame 5, conviennent pour des régimes intermédiaires du moteur.

Les positions de la lame 5 peuvent varier légèrement d'un cylindre à un autre pour compenser les différences de forme et de longueur des conduits d'admission.

Bien entendu, le dispositif que l'on vient de décrire peut également s'appliquer au cas d'un moteur thermique ne comportant qu'un seul conduit d'admission par cylindre ou plus de deux conduits d'admission par cylindre.

## Revendications

1. Dispositif d'admission pour moteur thermique à allumage commandé comportant pour chaque cylindre au moins un conduit d'admission (1) débouchant dans ledit cylindre, l'admission du mélange air-carburant dans ce cylindre étant commandée par une soupape (3) pour ledit conduit, au moins un injecteur (4) étant disposé en amont de la soupape (3) pour injecter le carburant dans le conduit (1), **caractérisé en ce qu'**à l'intérieur du conduit d'admission (1), entre l'injecteur (4) et la soupape (3) est fixée une lame flexible (5) qui est rendue solidaire de la paroi (6) du conduit (1) sur une certaine longueur (L) de celui-ci, à partir de la soupape (3) et qui est libre par rapport à la paroi (6) du conduit (1) sur le reste de sa longueur, cette partie libre de la lame (5) pouvant fléchir entre une position de repos dans laquelle cette lame (5) sépare diamétralement le conduit (1), en deux parties (1a, 1b) sensiblement égales et une position dans laquelle l'une des deux parties du conduit (1) est obturée par ladite lame flexible (5).

2. Dispositif d'admission selon la revendication 1, **caractérisé en ce qu'**il comprend deux conduits d'admission (1, 2) pour chaque cylindre, chaque conduit d'admission comportant une lame flexible (5).

3. Dispositif d'admission selon la revendication 2, **caractérise en ce que** la lame flexible (5) est commune pour les deux conduits (1, 2).

4. Dispositif d'admission selon l'une des revendications 2 ou 3, **caractérisé en ce que** la lame flexible (5) est rendue solidaire des parois (6, 7) des conduits (1, 2) par encastrement de ses bords latéraux (5a, 5b) dans lesdites parois.

5. Dispositif d'admission selon l'une des revendications 2 à 4, **caractérisé en ce que** dans la partie flexible de la lame (5), les bords latéraux (5a, 5b) de celle-ci sont sensiblement jointifs avec la paroi (6,7) des conduits (1,2).

6. Dispositif d'admission selon la revendication 5, **caractérisé en ce que** les conduits (1, 2) présentent une section sensiblement rectangulaire dans la zone où s'étend la partie flexible de la lame (5), cette section rectangulaire délimitant les diverses positions de la lame (5) entre les deux positions précitées.

7. Dispositif d'admission selon l'une des revendications 2 à 6, **caractérisé en ce que** les deux conduits (1, 2) comportent un bossage (8) à l'intérieur duquel l'injecteur (4) est agencé pour injecter le carburant dans les conduits (1, 2).

8. Dispositif d'admission selon l'une des revendications 2 à 7, **caractérisé en ce que** chacun des deux bords latéraux (5a, 5b) de la lame (6), comporte une encoche (9) qui est comprise entre la partie de la lame (5) qui est solidaire de la paroi (6, 7) des conduits (1, 2) et la partie de la lame (5) qui est libre par rapport à ces conduits.

9. Dispositif d'admission selon l'une des revendications 2 à 8, **caractérisé en ce que** l'extrémité de la lame (5) qui est adjacente aux deux soupapes d'admission (3), comporte deux échancrures (10), chacune de celles-ci étant engagée sur la tige (3a) de l'une des deux soupapes (3).

10. Dispositif selon la revendication 3, **caractérisé en ce que** la lame flexible (5) est rendue solidaire des parois (6, 7) des conduits (1, 2) lors du moulage de fonderie, la partie de la lame comprise entre les deux conduits (1, 2) présentant des trous (11, 12, 13) permettant le passage du sable du noyau de fonderie.
